Europäisches Patentamt

(19) European Patent Office

Office européen des brevets

(11) Publication number : **0 473 403 A2**

# (12) EUROPEAN PATENT APPLICATION

(21) Application number : **91307860.6**

(22) Date of filing : **28.08.91**

(51) Int. Cl.⁵ : **G06K 3/00**

(30) Priority : **28.08.90 JP 224559/90**

(43) Date of publication of application :
**04.03.92 Bulletin 92/10**

(84) Designated Contracting States :
**DE FR GB**

(71) Applicant : **NCR CORPORATION**
**World Headquarters**
**Dayton, Ohio 45479 (US)**

(72) Inventor : **Ono, Tsutomu**
**364-2, Kamaonomiya**
**Odawara-Shi, Kanagawa (JP)**

(74) Representative : **Robinson, Robert George**
**International Patent Department NCR Limited**
**915 High Road North Finchley**
**London N12 8QJ (GB)**

(54) Record card on which visual data can be printed and erased.

(57) The present invention relates to a record card (10) having a substrate (11) and a heat-sensitive layer (20) which can change from a transparent state to an opaque state and vice versa in accordance with a temperature applied thereto so as to thermally print or erase visual data (13) on the card (10). The invention also relates to a recording apparatus (28) comprising a print head (64) which is capable of erasing the data from the heat-sensitive layer (20) by heating the heat-sensitive layer (20) to a temperature within a predetermined range of temperatures. The print head (64) is also capable of printing by means of heating elements (70) which print rows of pixels to form characters or data (13) on the heat-sensitive layer (20) of the card (10) by selectively heating the heat-sensitive layer 20 to another temperature higher than said predetermined range of temperatures.

## FIG. 2

EP 0 473 403 A2

The present invention relates to a record card on which data can be erased and printed in a rewritable manner. The invention also relates to a recording apparatus which can write visual data on to the record card.

In a record card which has been conventionally available, data is recorded in either magnetic stripes or in an integrated circuit ("IC") on the card. In order to enable the data stored in the magnetic stripes or in the IC to be read visually, it is necessary to print the data on a separate medium, such as a recording paper or the like, by means of a printer at a point of sale terminal (POS terminal).

The number of times the record card is used by a customer may be indicated by punching holes through the card.

Further, in many types of record cards, such as registered member's cards, hospital cards, and training school cards, data (such as reservation management, lecture time, roll call management, receipt and the like) is written by hand directly on to the card. Alternatively, data can be recorded with a hand stamp directly on to the card. When a card is completely filled with data, another card is issued.

In the technical field of printing visual data on a card in a rewritable manner, different techniques such as those described in published Japanese Patent Application No. 233425/86 and published Japanese Patent Application No. 92289/87 have been proposed. In a record card disclosed in published Japanese Patent Application No. 233425/86, there is provided a dispersion liquid for dispersing light-reflective magnetic particles between a magnetic recording sheet and a transparent sheet, and visual data can be magnetically printed therein or erased therefrom. In a record card disclosed in published Japanese Patent Application No. 92289/87, a material having a polymer and a liquid crystal material of magnetic anisotropy are mixed up and contained in a cavity in the card. Visual data is magnetically printed therein or erased therefrom.

However, the above mentioned prior cards have the following drawbacks.

(a) The card disclosed in published Japanese Patent Application No. 233425/86 is prepared by dispersing the magnetic material in the dispersion liquid. The magnetic material is not uniformly dispersed, and consequently it is difficult to read any data magnetically printed on the card.

(b) In both of the above mentioned prior art cards , it is expensive to manufacture the card.

(c) In both of the above mentioned prior art cards, it is necessary for the data to be magnetically printed on the card.

Accordingly, an object of the present invention is to provide a record card on which visual data can be recorded in a readily readable and rewritable manner, wherein the above drawbacks are alleviated.

Thus, according to the invention, there is provided a record card, characterized by a heat-sensitive layer (20) which can be rendered transparent by heating said layer (20) to a first temperature within a predetermined range of temperatures, and which can be rendered opaque by heating said layer (20) to a second temperature above said predetermined range of temperatures, whereby visual data (13) can be written into or erased from said record card (10) by selectively heating portions of said heat-sensitive layer (20) to one or other of said first and second temperatures.

Embodiments of the invention will now be described, by way of example, with reference to the accompanying drawings, wherein like reference numerals indicate like or corresponding parts throughout the several views, and wherein

Fig. 1 is a perspective view of a record card according to one embodiment of the present invention;

Fig. 2 is an enlarged, partially sectional, end view of the record card shown in Fig.1;

Figs. 3A and 3B, taken separately, are diagrams showing a front side and a back side, respectively, of a bank cash card according to one embodiment of the present invention;

Figs. 3C to 3H, inclusive, are diagrams showing the front and the back of various record cards according to other embodiments of the present invention;

Figs. 4A and 4B, taken together, constitute a schematic diagram showing a recording apparatus according to one embodiment of the present invention;

Fig. 5 is a sectional view of a thermal print head used in the recording apparatus;

Fig. 6 is a front view of the thermal head, taken in the direction of arrow B in Fig. 5, showing one heating unit and a plurality of heating elements; and

Fig. 7 is another front view of another thermal head, which may be used with recording apparatus of the present invention.

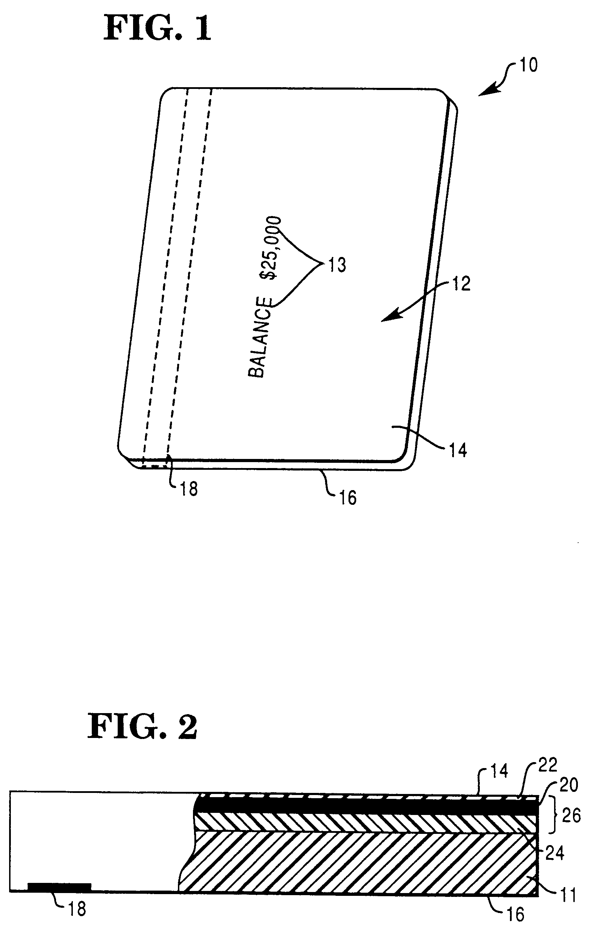

Fig. 1 is a perspective view illustrating a record card, 10 according to one embodiment of the present invention. The record card 10 can be any suitable transaction card, such as a cash card, bank card, pay-in card, retail store service card consulting card, credit card and the like.

The record card 10 includes a front surface 14 and a back surface 16. The back surface 16 has a magnetic recording stripe 18 secured thereto. Fig. 1 shows an example in which data 13, such as the balance of a bank account at a bank, is printed in a visual data recording section 12 on the front surface 14 of the record card 10. As best illustrated in Fig. 2, the visual data recording section 12 includes a substrate layer 11, a heat-sensitive layer 20, a protection layer 22 and a supporting layer 24. In order to facilitate placing the layers 20, 22 and 24 on to the substrate layer 11, the layers 20, 22 and 24 may be integrated into a heat-sensitive film 26. The heat-sensitive film 26 may then be applied or adhered on to the substrate layer 11. Although not shown, the visual data recording section 12 could include an integrated circuit (not shown).

The heat-sensitive layer 20 is comprised of a heat-sensitive material developed by Nitto Denko Co., Ltd. of Ibaragi City, Osaka-Fu, Japan. The heat-sensitive material is non-transparent or cloudy in the opaque state and has the characteristics shown in the following Table A.

TABLE A

| Item | Measured Value | | |
|---|---|---|---|
| Thickness of Heat-Sensitive Layer 20 in micrometers | 8 | 10 | 20 |
| Optical Concentration (*) | | | |
| Image Area (Non-transparent) | 0.65 | 0.65 | 0.65 |
| Non-Image Area (Transparent) | 1.48 | 1.40 | 1.40 |
| Image Forming Temperature (°C) | | | |
| Image Area (Non-transparent) | > 101 | | |
| Non-Image Area (Transparent) | 80 - 100 | | |

(*) The optical concentration was measured on a standard blackboard with the use of the Macbeth concentration measuring apparatus Model RD-920, manufactured by Kollmorgan Corporation of the United States of America.

Any portion of the heat-sensitive layer 20 when heated from room temperature to a temperature ranging between 80°C and 100°C is rendered transparent. Any portion of the heat sensitive layer 20 when heated from room temperature to a temperature of 101°C or above is rendered non-transparent or opaque. In those areas of the heat-sensitive layer 20 that are heated to become opaque, either the upper portion (Fig. 2) of the substrate layer 11 or the support layer 24 becomes blackened or dark. By selectively heating portions or areas of the heat-sensitive layer 20, characters of data 13 (Fig. 1) may be formed. The data 13 may be made visible by causing non-transparent or opaque characters to appear on a transparent background. Alternatively, the data 13 could be made visible by providing transparent characters on a non-transparent background. The process and apparatus for heating any portion of the heat-sensitive layer 20 will be described later herein. When it is desired to erase the data 13, the heat-sensitive layer 20 where the data 13 appears is heated to a temperature ranging between 80°C - 100°C, thereby making the heat-sensitive layer 20 transparent. New data 13 can then be thermally printed on the transparent layer 20 in the manner described previously herein.

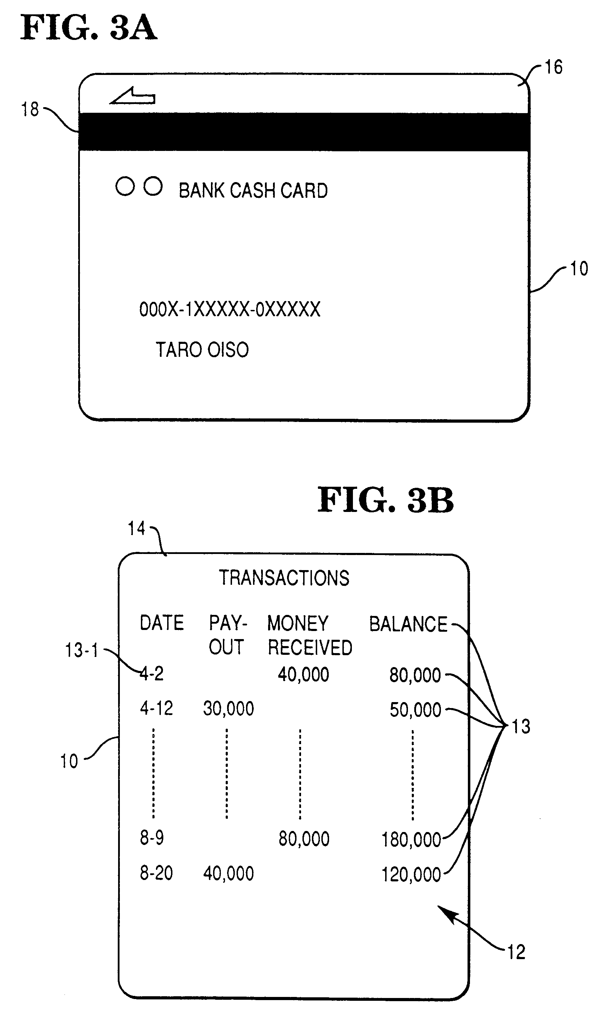

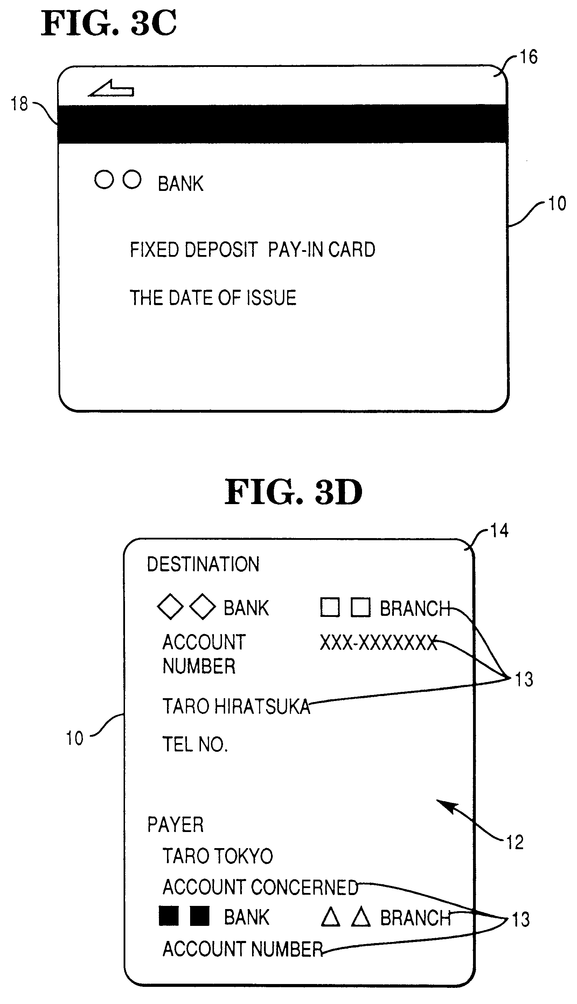

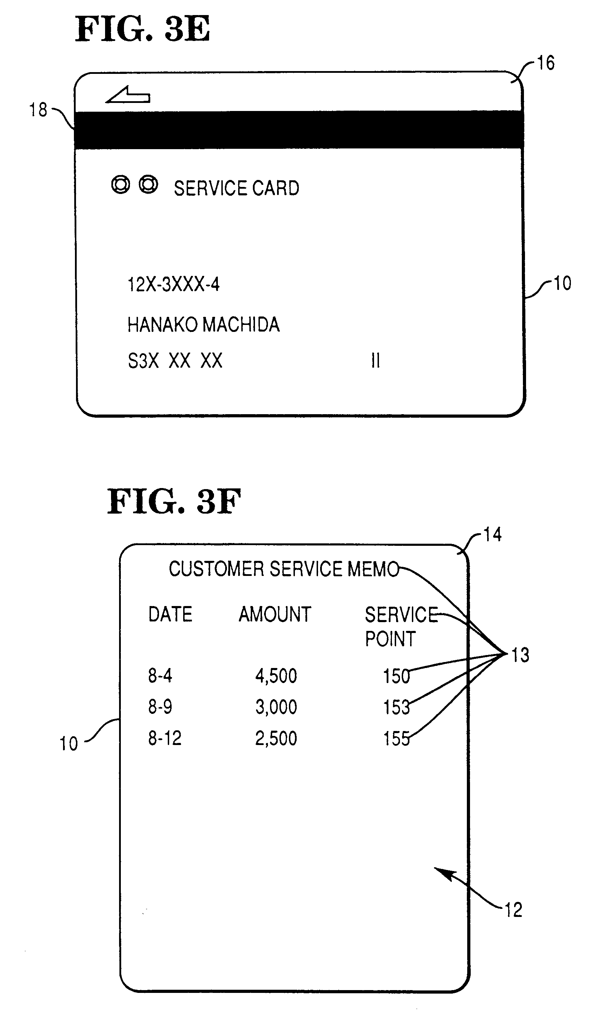

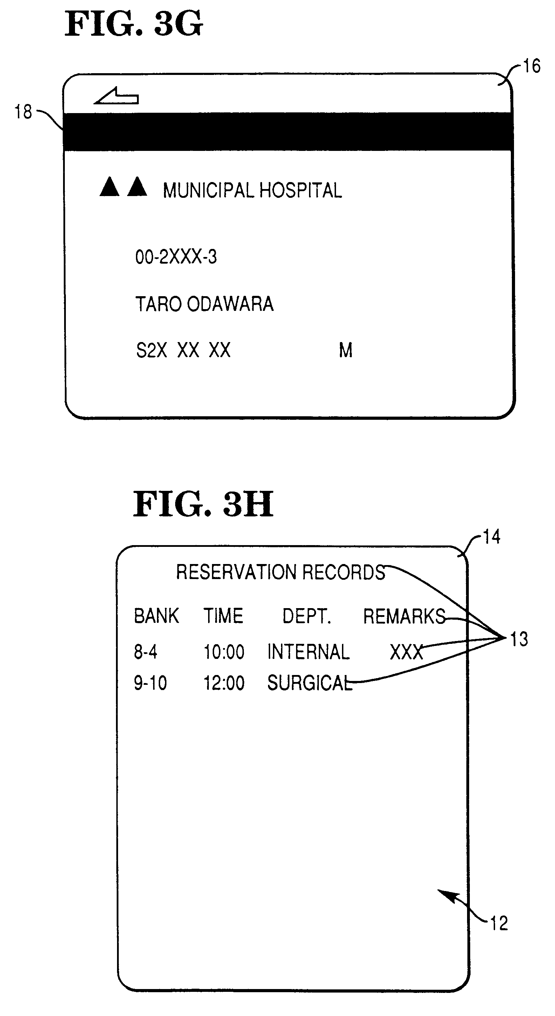

Figs. 3A - 3H show several examples of the record card 10 according to the present invention. The Figs. 3A, 3C, 3E and 3G show the back surface 16 of the record card 10, and Figs. 3B, 3D, 3F and 3H show the

EP 0 473 403 A2

front surface 14 of the record card 10. The front surface 14 is typically where data 13 is printed. In each of these embodiments, the entire front surface 14 constitutes the visual data recording section 12. Figs. 3A and 3B show an embodiment in which the transaction records and balance are recorded on the record card 10. In this example, the record card 10 is a bank or cash card. After a transaction is completed, at least one row of data 13 is thermally printed on the record card 10 in order to visually record the transaction on the record card 10. The rows of printed data 13 can be rewritten on the card on a first-in first-out basis.

Alternatively, the most out-of-date row of data 13-1 (Fig. 3B) can be erased and the latest data 13 can be printed in place thereof.

Figs. 3C and 3D show an example in which the present invention is applied to a pay-in card. The pay-in card or money transfer card is used when a customer sends money from his own savings account at one bank to an account at another bank. The pay-in card is used to pay in money to a predetermined recipient or destination. When a destination to which money is to be paid is changed, the record card 10 can be re-used as a fresh pay-in card simply by rewriting new data 13 over old data 13.

Figs. 3E and 3F show an example in which the present invention is applied to a record card 10 which is a service card. The record card 10 is typically used in a service system where service points or credits are awarded to a customer in accordance with the amount of money paid for purchased articles. When the cumulative service points reach a predetermined value, the customer is granted some privilege or benefit.

Figs. 3G and 3H show yet another example in which the present invention is applied to a hospital card on which data 13, such as consulting date, time of visit, hours and the like, may be recorded. In addition to the above, any other type of record card 10, such as a credit card or an integrated circuit (IC) card, of the type on which visual data may be beneficially recorded can be prepared by applying the heat-sensitive layer 20 thereon.

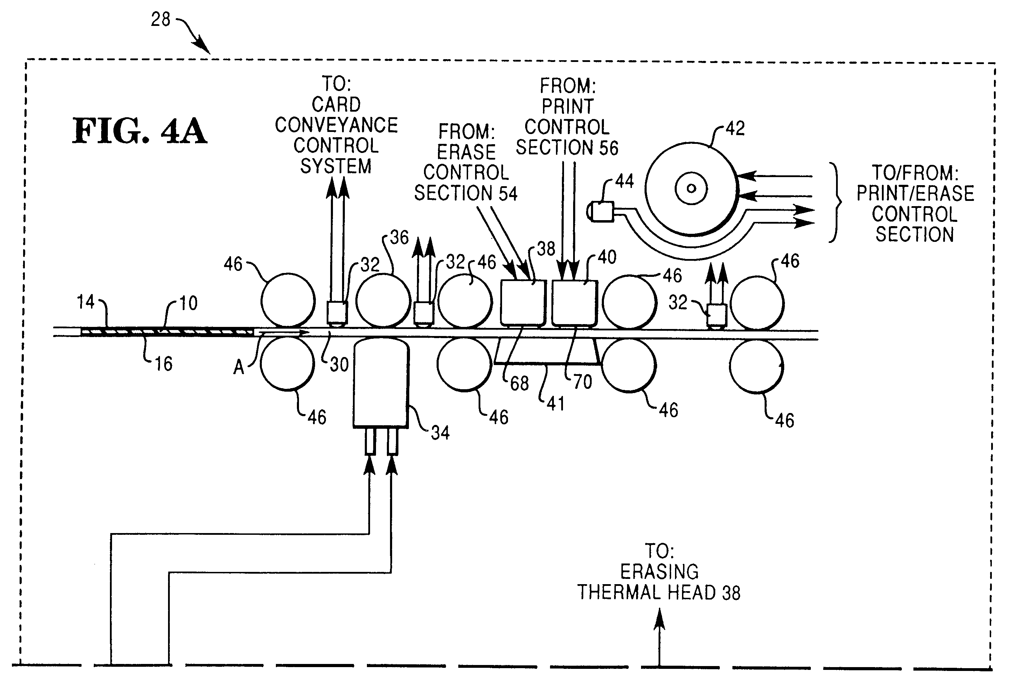

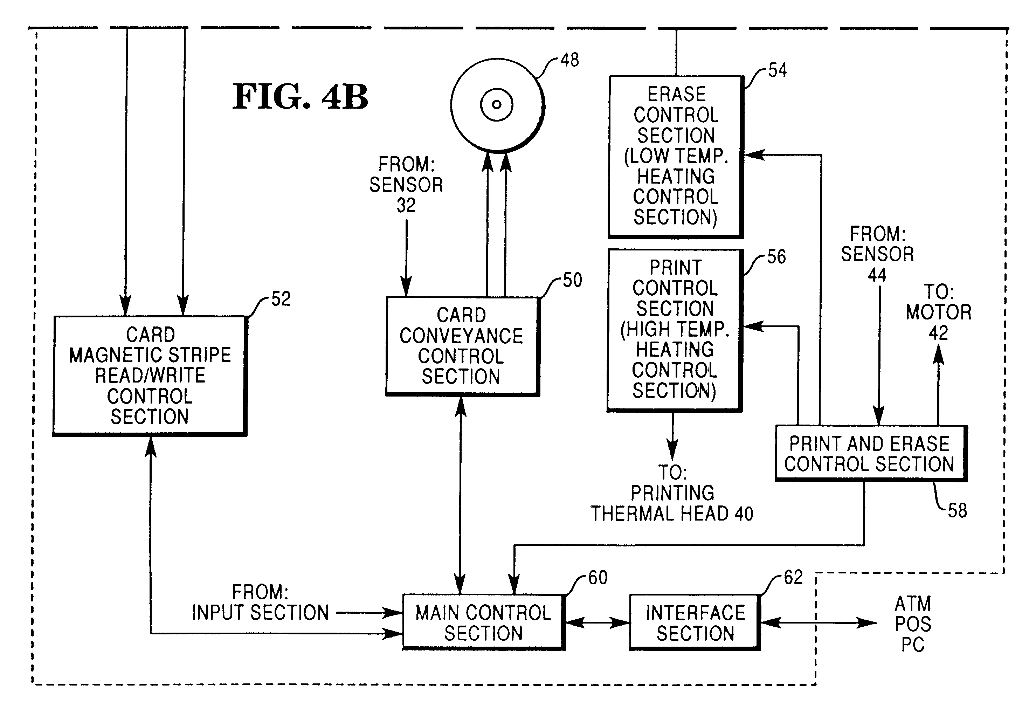

Next, a recording apparatus 28 for printing or erasing the visual data 13 on the record card 10 will be described with reference to Figs. 4A and 4B.

Figs. 4A and 4B, taken together, constitute a schematic diagram showing the structure of an embodiment of the recording apparatus 28 according to the present invention. As illustrated in Fig. 4A, the recording apparatus 28 comprises a conveyance path 30, a plurality of card position sensors 32, a magnetic head 34, a roll 36 for pressing the record card 10 against the magnetic head 34, an erase head 38, a print head 40, a head moving motor 42, and a platen 41 for the heads 38 and 40. Although not shown in Fig. 4A, it is possible to integrate the erase and print heads 38 and 40 into one unit if desired. The erase and print heads 38 and 40 can be integrally moved towards and away from the conveyance path 30 in a direction which is perpendicular to the conveyance path 30. While the recording card 10 is moved in the direction of arrow A in Fig. 4A, the print head 40 prints the data 13 on the front side 14 of the record card 10 in rows in a direction perpendicular to the magnetic recording stripe 18. The erase and print heads 38 and 40 are moved towards and away from the conveyance path 30 by the head moving motor 42. A head position sensor 44 in the recording apparatus 28 is used to detect the position of the heads 38 and 40.

On the conveyance path 30, there are provided a plurality of conveying rollers 46 which are rotatably driven by a conveying rollers 48, (Fig. 4B). The conveying rollers 46 (Fig. 4A) and the conveying motor 48 (Fig. 4B) are controlled by a card conveyance control section 50 (Fig. 4B) in accordance with signals sent from the plurality of card position sensors 32 (Fig. 4A).

The recording apparatus 28 also comprises a magnetic stripe read/write control section 52 (Fig. 4B) for controlling the operation of the magnetic head 34 (Fig. 4A), a visual data erase control section 54 (Fig. 4B), a print control section 56, a print and erase control section 58, and a main control section 60. The main control section 60 controls the sections 54, 56 and 58 based on data which is inputted from the magnetic stripe read/write control section 52, or input data from an input section (not shown), or data from an automated teller machine (ATM), a point of sale terminal (POS) or a personal computer (PC) and the like via an interface section 62 (Fig. 4B).

Next, the operation of the recording apparatus 28 will be described. When the record card 10 is inserted from the left side of the conveyance path 30 (as viewed in Fig. 4A), the insertion of the record card 10 is sensed by the sensor 32 and a sensor signal (not shown) is transmitted to the card conveyance control section 50 (Fig. 4B) to actuate the conveying motor 48. When the conveying motor 48 is actuated, the conveying rollers 46 (Fig. 4A) feed the record card 10 through the conveyance path 30. When the record card 10 is moved past the magnetic head 34, the magnetic data (not shown) recorded on the magnetic recording stripe 18 is read out and sent to the main control section 60 via the magnetic stripe read/write control section 52. The main control section 60 processes the magnetic data (not shown) and any input data (not shown) received from the ATM, POS or PC. After processing the magnetic and input data, the magnetically recorded data (not shown) is updated and magnetically printed on the magnetic recording stripe 18 as may be required.

The operations of printing and erasing the data 13 are performed in a direction perpendicular to the front surface 14 of the record card 10. The record card 10 is placed on its side in conveyance path 30 so that the

4

magnetic recording stripe 18 is parallel with the bottom of the conveyance path 30. The operations are performed by conveying the record card 10 by the conveying rollers 46 to the erase and print heads 38 and 40. As an alternative, the erase and print heads 38 and 40 may be positioned such that the data 13 can be printed in the same direction as the magnetic recording stripe 18 by the amount corresponding to a predetermined width. This would permit the data 13, such as the account balance shown in Fig. 1, to be printed in large characters in order to make the data 13 more visible. The conveyance of the record card 10 and the movement of the heads 38 and 40 during the data printing operation are performed by the card conveyance control section 50 (Fig. 4B) and the print and erase control section 58. The data 13 is transmitted from the ATM (not shown), for example, via the interface section 62 to the main control section 60 which controls the print and erase control section 58.

The print and erase control section 58 in turn controls the erase control section 54 and the print control section 56. The erase control section 54 causes the erase head 38 (Fig. 4A) to erase the data 13 during the erasing operation, and the print control section 56 causes the print head 40 to print the data 13 during the printing operation.

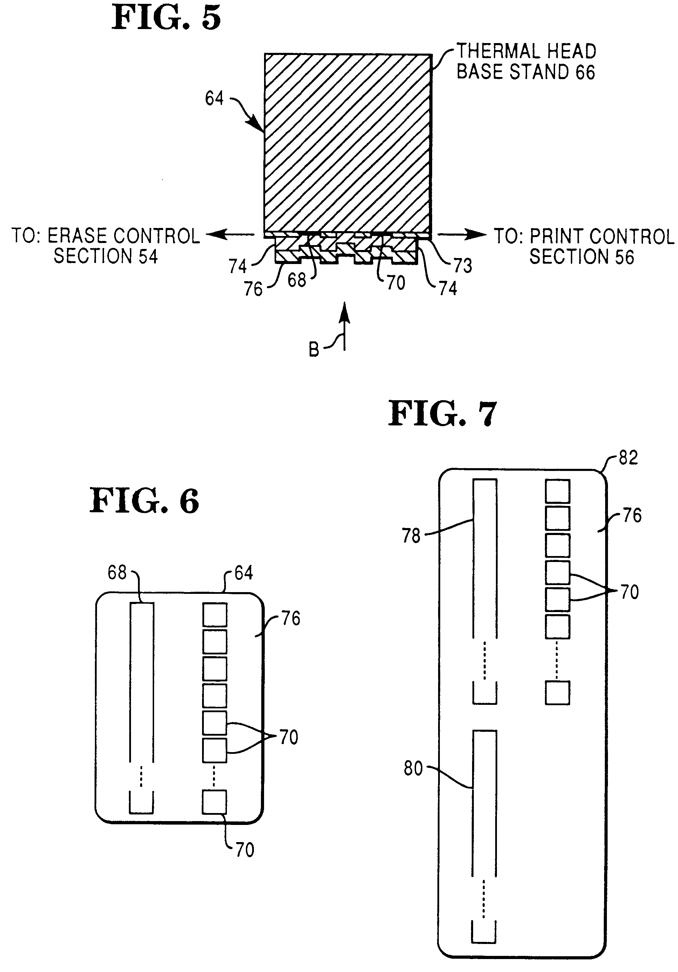

Fig. 5 shows an embodiment of a print head 64 having the erase head 38 and print head 40 integrated therein. Fig. 5 is a sectional view of the print head 64. Fig. 6 is an illustration, taken in the direction of arrow B in Fig. 5, diagrammatically showing the front surface of the print head 64, and Fig. 7 shows another embodiment of the print head 64.

As shown in Fig. 5, the erase head 38 and print head 40 are mounted on a thermal head base stand 66. The print head 64 comprises a heating unit 68 which is used during the erasing operation and dot heating elements 70 which are used during the printing operation. As shown in Fig. 6, a plurality of heating elements 70 are provided in each thermal head 64 such that one heating element 70 constitutes one pixel or dot of a print pattern, such as a character or letter of the data 13. The entire column of heating elements 70 may extend the entire height of a character of the data 13. Conductive wiring 73 (Fig. 5) is connected to the heating unit 68 and to the individual heating element 70. The heating unit 68 and the heating elements 70 are covered with an oxidation preventing film 74 adapted to prevent the heating unit 68 and the heating elements 70 from being oxidized by heat. The oxidation preventing film 74 is covered by a protective film 76. The protective film 76 protects the oxidation preventing film 74, heating unit 68 and heating elements 70 from abrasion.

The record card 10 is moved in the conveyance path 30 (Fig. 4A) past the heating unit 68 and the heating elements 70 (from left to right as viewed in Fig. 5). To erase a row of data 13, the erase control section 54 energizes the heating unit 68 to heat the heat-sensitive layer 20 (Fig. 2) where the row of data is printed to between 80 and 100°C. The heating by heating unit 68 to this temperature causes this area of the heat-sensitive layer 20 to become transparent, thereby causing the data 13 to be erased. The data 13 is printed on the record card 10 when the print control section 56 selectively energizes the heating elements 70 to heat the heat-sensitive layer 20 to a temperature above 101°C. The heating by heating elements 70 to a temperature above 101°C causes the rows of pixels to be thermally printed on the record card 10. As the record card 10 is moved past the print head 40, multiple rows of pixels can be printed on the heat-sensitive layer 20, thereby causing a row of data 13 to be printed. Although not shown, the data 13 can also be made visible on the record card 10 by causing the characters of data 13 to be transparent and causing the background to be opaque.

Two data erasing heating units 78 and 80 are provided on a thermal head 82 according to another embodiment of the present invention shown in Fig. 7. In the embodiment shown in Fig. 6, the heating unit 68 is extended for the length of the print head 64. In contrast, the thermal head 82 used in the embodiment shown in Fig. 7 has two heating units 78 and 80. When the transaction records and the like are printed on the record card 10, as shown in Fig. 3B, the data 13 is printed down to the final row on the record card 10. The print head 64 is returned to the top row and the heating unit 78 erases the old data 13 on the top row, and at the same time the heating elements 70 are selectively energized to print a new line of data 13. While this operation is occurring, the heating unit 80 erases the next or second row of old data 13. This causes a blank row to appear under the newest row of data 13. The print head 64 can print data 13 on this blank row during which time the heating unit 80 erases the third row of data 13. This sequence is repeated until the final row on the record card 10 is printed, whereupon the print head 64 is again moved to the first row. In this embodiment, two heating units 78 and 80 are employed, but one elongated heating unit may be used if desired.

## Claims

1. A record card, characterized by a heat-sensitive layer (20) which can be rendered transparent by heating said layer (20) to a first temperature within a predetermined range of temperatures, and which can be rendered opaque by heating said layer (20) to a second temperature above said predetermined range of temperatures, whereby visual data (13) can be written into or erased from said record card (10) by selectively heating portions of said heat-sensitive layer(20) to one or other of said first and second temperatures.

2. A record card according to claim 1, characterized in that said heat-sensitive layer(20) is made of a material such that said first temperature lies within the range of 80°C to 100°C, and said second temperature is at least 101°C.

3. A record card according to either claim 1 or claim 2, characterized by a data recording section(12) consisting of a supporting layer (24) on which said heat-sensitive layer (20) is provided and a protective layer (22) which overlies said heat-sensitive layer(20).

4. A record card according to claim 3, characterized in that said supporting layer (24), said heat-sensitive layer (20) and said protective layer (22) are integrated into a heat-sensitive film (26) which may be affixed to a substrate (11).

5. A record card according to claim 4, characterized in that said substrate (11) has a magnetic stripe (18) thereon.

6. A recording apparatus for recording data on a record card (10) according to any one of the preceding claims, characterized by thermal printing means (40) including a plurality of selectively energizable heat elements (70) for printing characters on said record card (10); thermal erasing means (38) including a heatable erasing area (68) for use in erasing characters recorded on said card (10); and control means (58) for controlling the operation of said printing means (40) and erasing means (38).

7. A recording apparatus according to claim 6, characterized in that said printing means (40) and erasing means (38) are provided on a print head (64) which is movable in operation relative to said record card (10).

8. A recording apparatus according to claim 7, characterized in that said heating elements (70) each constitute a dot of a print pattern.

# FIG. 1

10

BALANCE $25,000 —13

12

14

18

16

# FIG. 2

14 — 22
20
26
24
11

18

16

# FIG. 3A

18 ⟵

16 ⟶

⌂

○ ○  BANK CASH CARD

10 ⟶

000X-1XXXXX-0XXXXX

TARO OISO

# FIG. 3B

14 ⟶

TRANSACTIONS

| DATE | PAY-OUT | MONEY RECEIVED | BALANCE |
|------|---------|----------------|---------|
| 4-2  |         | 40,000         | 80,000  |
| 4-12 | 30,000  |                | 50,000  |
| ⋮    | ⋮       | ⋮              | ⋮       |
| 8-9  |         | 80,000         | 180,000 |
| 8-20 | 40,000  |                | 120,000 |

13-1

10

13

12

# FIG. 3C

○ ○ BANK

FIXED DEPOSIT PAY-IN CARD

THE DATE OF ISSUE

# FIG. 3D

DESTINATION

◇ ◇ BANK □ □ BRANCH

ACCOUNT XXX-XXXXXXX
NUMBER

TARO HIRATSUKA

TEL NO.

PAYER

TARO TOKYO

ACCOUNT CONCERNED

■ ■ BANK △ △ BRANCH

ACCOUNT NUMBER

# FIG. 3E

SERVICE CARD

12X-3XXX-4

HANAKO MACHIDA

S3X XX XX                    II

# FIG. 3F

CUSTOMER SERVICE MEMO

| DATE | AMOUNT | SERVICE POINT |
|------|--------|---------------|
| 8-4  | 4,500  | 150           |
| 8-9  | 3,000  | 153           |
| 8-12 | 2,500  | 155           |

# FIG. 3G

▲ ▲ MUNICIPAL HOSPITAL

00-2XXX-3

TARO ODAWARA

S2X  XX  XX                    M

# FIG. 3H

RESERVATION RECORDS

| BANK | TIME | DEPT. | REMARKS |
|------|------|-------|---------|
| 8-4 | 10:00 | INTERNAL | XXX |
| 9-10 | 12:00 | SURGICAL | |

# FIG. 4A

TO:
CARD
CONVEYANCE
CONTROL
SYSTEM

FROM:
ERASE
CONTROL
SECTION 54

FROM:
PRINT
CONTROL
SECTION 56

TO/FROM:
PRINT/ERASE
CONTROL
SECTION

TO:
ERASING
THERMAL HEAD 38

EP 0 473 403 A2

# FIG. 4B

CARD
MAGNETIC STRIPE
READ/WRITE
CONTROL
SECTION
~52

FROM:
SENSOR
32

48

CARD
CONVEYANCE
CONTROL
SECTION
~50

ERASE
CONTROL
SECTION
(LOW TEMP.
HEATING
CONTROL
SECTION)
54

PRINT
CONTROL
SECTION
(HIGH TEMP.
HEATING
CONTROL
SECTION)
56

FROM:
SENSOR
44

TO:
MOTOR
42

TO:
PRINTING
THERMAL HEAD 40

PRINT AND ERASE
CONTROL SECTION
58

FROM:
INPUT SECTION

MAIN CONTROL
SECTION
60

INTERFACE
SECTION
62

ATM
POS
PC

EP 0 473 403 A2

# FIG. 5

THERMAL HEAD
BASE STAND 66

64

TO: ERASE CONTROL
SECTION 54

TO: PRINT CONTROL
SECTION 56

74  73
76  68  70  74

B

# FIG. 7

82
76

78

70

80

# FIG. 6

68  64

76

70

70